# EUROPÄISCHE PATENTSCHRIFT

(11) **EP 1 031 481 B1**
(45) Veröffentlichungstag und Bekanntmachung des Hinweises auf die Patenterteilung: **08.06.2005**
(21) Anmeldenummer: 00102889.3
(22) Anmeldetag: 12.02.2000
(51) Int. Cl.: B60S 1/52, B60S 1/60, B60Q 1/00

(54) **Wascheinrichtung für eine Lichtscheibe einer Leuchte oder eines Scheinwerfers eines Fahrzeuges**
Washing device for the lens of a lamp or for a vehicle headlight
Dispositif de lavage pour un verre de lampe ou un phare de véhicule

(30) Priorität: 27.02.1999 DE 19908643
(43) Veröffentlichungstag der Anmeldung: 30.08.2000
(73) Patentinhaber: Hella KGaA Hueck & Co., 59552 Lippstadt (DE)
(72) Erfinder: Lazarus, Reinhard, 33178 Borchen (DE); Orth, Peter, 59557 Lippstadt (DE)

(56) Entgegenhaltungen:
- DE-A- 4 333 732
- DE-A- 4 401 744
- FR-A- 2 671 773

## Beschreibung

Die Erfindung betrifft eine Wascheinrichtung für eine Lichtscheibe einer Leuchte oder eines Scheinwerfers eines Fahrzeuges mit einer im Inneren der Karosserie angeordneten Düsenverstellvorrichtung, durch die eine Düse von einer inaktiven Stellung durch eine Karosserieöffnung hindurch in eine aktive Stellung verstellbar ist, mit einer verschwenkbaren Abdeckung, welche an einem die Düse tragenden verstellbaren Düsenkörper der Düsenverstellvorrichtung angebracht ist und mit dem Düsenkörper über eine kardanische Gelenkvorrichtung verbunden ist, durch welche die verschwenkbare Abdeckung in der inaktiven Stellung der Düse selbsttätig an einen umlaufenden Rand der Karosserieöffnung anlegbar ist.

Aus der DE 43 33 732 C2 ist eine Wascheinrichtung für eine Lichtscheibe eines Scheinwerfers bekannt geworden, welche eine Düse und eine der Düse zugeordnete Abdeckung aufweist. Die Düse ist in einem Gehäuse angeordnet, welche von dem freien Endabschnitt eines verstellbaren Rohrstutzens gebildet ist. Der Rohrstutzen ist mit einer Düsenverstellvorrichtung koppelbar, durch welche die Düse bzw. der Rohrstutzen teleskopartig verstellbar ist. Die Düsenverstellvorrichtung ist in das Innere einer Fahrzeugkarosserie einsetzbar. Durch die Düsenverstellvorrichtung ist die Düse von einer inaktiven Stellung durch eine Karosserieöffnung hindurch in eine aktive Stellung teleskopartig verstellbar. In der aktiven Stellung tritt aus der Düse ein von kleinen Wassertröpfchen gebildeter Sprühkegel aus, welcher zur Lichtscheibe des Scheinwerfers hin ausgerichtet ist. Durch das Auftreffen der Wassertröpfchen löst sich Schmutz von der Lichtscheibe. An die Innenseite der Abdeckung sind zwei Laschen angeformt, zwischen denen der freie Endabschnitt des Rohrstutzens angeordnet ist. Der freie Endabschnitt greift mit nach außen ragenden Lagerzapfen in Lageröffnungen der Laschen ein. Dadurch ist die Abdeckung um eine quer zur Verstellrichtung der Düse verlaufende Achse kippbar. Weiterhin greifen Anschlagzapfen des Rohrstutzens mit sehr großem Spiel in Anschlagöffnungen der Laschen ein, um einen begrenzten Kippwinkel zu erhalten. Dadurch wird die Abdeckung bei herausgefahrener Düse annähernd in ihrer Stellung gehalten. Beim Einfahren der Düse legt sich die schwenkbare Abdeckung mit ihrem Rand an den Rand der Karosserieöffnung an. Eine umlaufende Anlage der Abdeckung an der Karosserie ist nicht sicher, da die Abdeckung nur um eine Achse schwenkbar ist. Bei einer anderen bekannten Wascheinrichtung für eine Lichtscheibe eines Scheinwerfers ist dieser Nachteil beseitigt, indem die Abdeckung durch eine kardanische Gelenkvorrichtung mit dem Endabschnitt des Rohrstutzens verbunden ist. Hierbei ist die gesamte kardanische Gelenkvorrichtung zwischen dem freien Endabschnitt und der Abdeckung angeordnet, und somit baut die Düsenversteilvorrichtung wegen der kardanischen Gelenkvorrichtung in Verstellrichtung der Düse entsprechend größer. Eine solche kardanische Gelenkvorrichtung kann bei sehr engen Platzverhältnissen im Karosserieinneren nicht realisiert werden.

Aufgabe der Erfindung ist es, die im Oberbegriff des Anspruchs 1 beschriebene Wascheinrichtung für eine Lichtscheibe einer Leuchte oder eines Scheinwerfers eines Fahrzeuges derart zu gestalten, daß die Düsenverstellvorrichtung in Verstellrichtung der Düse wegen der kardanischen Gelenkvorrichtung nicht länger bauen muß und trotzdem durch die kardanische Gelenkvorrichtung eine stabile Verbindung zwischen der Abdeckung und der Düsenverstellvorrichtung besteht. Diese Aufgabe wird nach der Erfindung dadurch gelöst, daß eine erste Achse der kardanischen Gelenkvorrichtung einer Hülse und von einem freien Endabschnitt des Düsenkörpers gebildet ist, auf welchem die Hülse verdrehbar angeordnet ist, wobei die Mittelachse der Hülse und des Endabschnitts quer zur Verstellrichtung der Düse verläuft und eine zweite Achse der kardanischen Gelenkvorrichtung durch die Hülse und die Abdeckung gebildet ist. Die kardanische Gelenkvorrichtung ist sehr stabil ausgeführt, da der Endabschnitt des Düsenkörpers selbst ein Lagerbolzen eines Gelenks ist.

Der Düsenkörper baut sehr kompakt, wenn sein Endabschnitt, auf den die Hülse aufgesetzt ist, ein Gehäuse für den Düsenkörper ist und die Düse mit der Spritzöffnung aus der Hülse herausragt. Somit fällt auch die Mittelachse des Gehäuses der Düse mit der ersten Achse zusammen, welche quer zur Verstellrichtung verläuft, und die Düse ist in ihrer herausgefahrenen Stellung so zur reinigenden Lichtscheibe ausgerichtet, daß der aus Wassertröpfchen bestehende Sprühkegel in einem möglichst großen spitzen Winkel auf die Lichtscheibe auftrifft. Je größer der spitze Winkel ist, um so größer ist der Reinigungserfolg.

Die Hülse ist unverlierbar mit dem Endabschnitt des Düsenträgers verbindbar und einfach und schnell montierbar, wenn zwischen der Hülse und dem Endabschnitt eine Nut-Feder-Verbindung besteht, welche koaxial zu der ersten Achse verläuft. Beim Aufsetzen der Hülse auf den Endabschnitt rastet die Feder selbsttätig in die Nut ein. Nach dem Einrasten der Hülse liegt diese mit einem nach innen gerichteten Randabschnitt an dem freien Rand des Endabschnitts an. Somit kann die Hülse nicht über ihre Verrastungsstelle hinaus gedrückt werden.

Die Hülse ist leichtgängig auf dem Endabschnitt des Düsenkörpers drehbar, wenn sie mit ihrer Innenseite zwischen der Nut-Feder-Verbindung und dem nach innen gerichteten Randabschnitt zur Mantelfläche des Endabschnitts beabstandet verläuft.

Der Schwenkwinkel der Abdeckung bzw. der Hülse um die erste Achse ist begrenzt, wenn die Hülse eine in Aufsetzrichtung geöffnete Aussparung aufweist, in welche ein Abschnitt des Düsenkörpers eingreift. In beiden möglichen Endstellungen der Abdeckung liegt der Abschnitt des Düsenkörpers an einer der sich zugewandten Seitenflächen der Aussparung an.

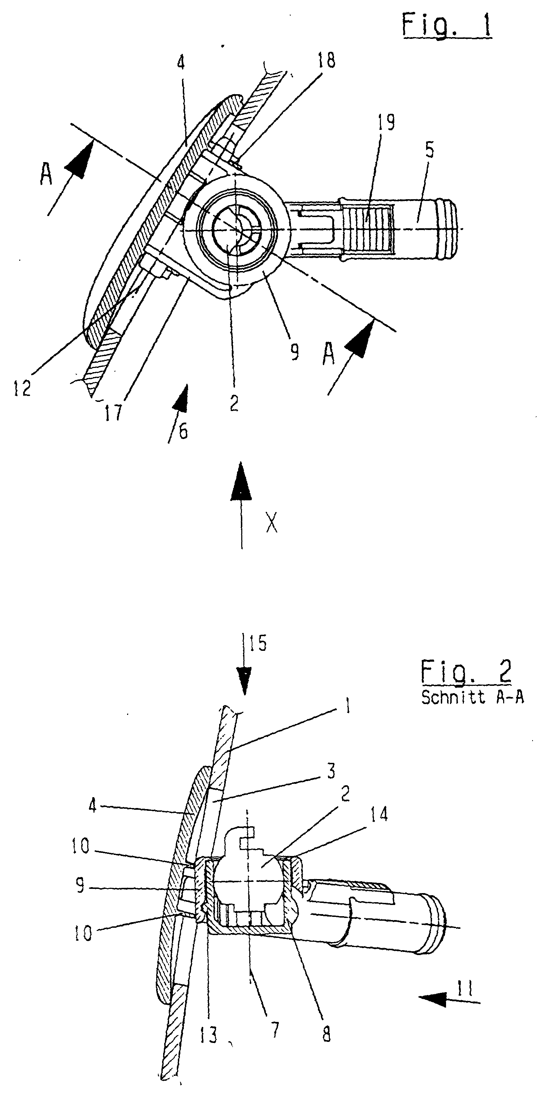

Weiterhin ist es vorteilhaft, wenn die zweite Achse durch an die Außenseite der Hülse und an die Innenseite der Abdeckung angebrachte Lagerelemente bestimmt ist. Hierbei sollte zumindest ein Lagerelement von einem federnd ausgeführten Wandabschnitt gebildet sein. Hierbei ist es vorteilhaft, wenn die Lagerelemente von Wandabschnitten gebildet sind, die zur Abdeckung bzw. zur Hülse hin weisen, wobei die sich benachbarten Wandabschnitte einen Lagerzapfen und eine Lageröffnung aufweisen. Dadurch ist die Abdeckung leicht und schnell mit der Hülse verbindbar. Die Abdeckung ist um die zweite Achse ebenfalls in einem begrenzten Winkel drehbar, wenn die Abdeckung an ihrer Innenseite Anschläge aufweist, an welchen die Hülse in beiden Endstellungen anliegt. Die Anschläge können von einem Flächenabschnitt der Innenseite der Abdeckung selbst gebildet sein.
Ein Ausführungsbeispiel nach der Erfindung ist in der Zeichnung dargestellt, und zwar zeigen
Figur 1 einen Düsenkörper mit einer aufgesetzten Abdeckung
Figur 2 einen Schnitt nach der Linie A-A in Figur 1 durch den Düsenkörper und die Abdeckung

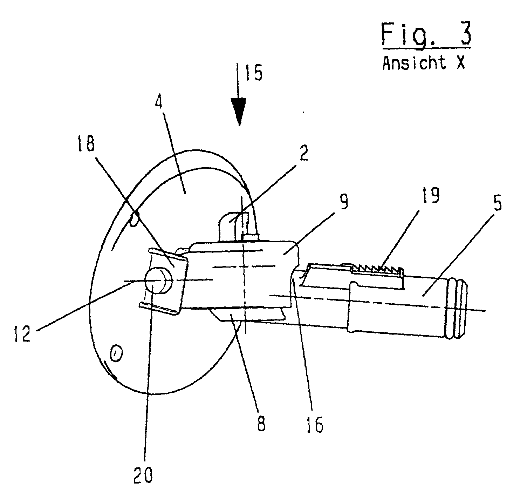

Figur 3 eine Ansicht aus Richtung X in Figur 1 auf den Düsenkörper und die Abdeckung.

In der Zeichnung ist ein Düsenkörper (5) mit einer Abdeckung (4) dargestellt, welcher zu einer nicht dargestellten Düsenverstellvorrichtung einer Wascheinrichtung gehört. Die Wascheinrichtung dient zur Reinigung einer Lichtscheibe eines Scheinwerfers oder einer Leuchte. Die Düsenverstellvorrichtung ist im Karosserieinneren angeordnet und verstellt eine von dem Düsenkörper (5) getragene Düse (2) von einer inaktiven Stellung durch eine Karosserieöffnung (3) einer Karosserie (1) hindurch in eine aktive Stellung (nicht dargestellt). In der aktiven Stellung der Düse (2) tritt ein aus Wassertröpfchen bestehender Sprühkegel aus, der in einem spitzen Winkel auf die Lichtscheibe auftrifft. Der Düsenkörper (5) ist rohrförmig gestaltet und weist eine Ratsche (19) auf, durch welche der Düsenkörper (5) mit der Düsenverstellvorrichtung auch dann noch koppelbar ist, wenn die Düsenverstellvorrichtung bereits hinter der Karosserie (1) angeordnet ist. Der Düsenkörper (5) weist benachbart zur Abdeckung (4) einen Endabschnitt (8) auf, der das Gehäuse für die Düse (2) ist. Die Mittelachse (7) des Endabschnitts (8) verläuft quer zur Verstellrichtung (11) der Düse (2). Der Endabschnitt (8) weist eine zylinderförmige Mantelfläche auf, auf die eine Hülse (9) aufgesetzt ist. Zwischen der Mantelfläche des Endabschnitts (8) und der zylindrischen Innenfläche der Hülse (9) besteht eine Nut-Feder-Verbindung (13). Die Nut-Feder-Verbindung (13) verläuft koaxial zur Mittelachse (7) des Endabschnitts (8). Die Feder ist eine von der Mantelfläche des Endabschnitts (8) gebildete Ringwulst, weiche in eine entsprechend geformte Nut der Hülse (9) eingreift. Die Hülse (9) liegt nach ihrem Verrasten mit dem Endabschnitt (8) mit einem nach innen gerichteten umlaufenden Randabschnitt (14) an dem freien Rand des Endabschnitts (8) an. Dadurch ist ein Überdrücken der Hülse (9) über die Raststelle hinaus nicht möglich. Die Hülse (9) weist einen Randabschnitt, welcher in Aufsetzrichtung (15) der Hülse (9) gerichtet ist, und eine in Aufsetzrichtung (15) geöffnete U-förmige Aussparung (16) auf. In die U-förmige Aussparung (16) greift ein rohrförmiger Abschnitt des Düsenkörpers (5) mit großem Spiel ein. Dadurch ist die Hülse um eine erste Achse (7), welche mit der Mittelachse des Endabschnitts zusammenfällt, um einen begrenzten Schwenkwinkel drehbar. Die Hülse (9) liegt in ihren beiden Endstellungen mit einer Seite der sich zugewandten Seiten der U-förmigen Aussparung (16) an dem rohrförmigen Abschnitt des Düsenkörpers (5) an.

Die Abdeckung (4) ist tellerartig gestaltet und ist um eine zweite Achse (12), welche quer zu der ersten Achse (7) verläuft, um einen Schwenkwinkel verstellbar. Die zweite Achse (12) ist von Lagerelementen (17) der Hülse (9) und Lagerelementen (18) der Abdeckung (4) gebildet. Als Lagerelemente (17, 18) dienen Wandabschnitte, welche zur Hülse (9) bzw. zur Abdeckung (4) hin gerichtet sind. Ein Wandabschnitt (17) der Hülse (9) ist durch eine Schräglage der Abdeckung (4) zur Verstellrichtung (11) der Düse (2) sehr lang und somit federnd ausgeführt. Die Lagerelemente (17) der Hülse (9) greifen mit Lagerzapfen (20) in entsprechend groß gestaltete Lageröffnungen der Lagerelemente (18) ein. Die Lagerelemente (17) der Hülse (9) erstrecken sich so weit zur Abdeckung (4) hin, daß die zweite Achse (12) zwischen der Hülse (9) und der Innenseite der Abdeckung (4) verläuft. Zwischen der Hülse (9) und der Innenseite der Abdeckung (4) besteht ein kleiner Spalt. Dadurch ist ein Verschwenken der Abdeckung (4) um die zweite Achse (12) in einem begrenzten Schwenkwinkel gegeben. In beiden Endstellungen der Abdeckung (4) liegt die Abdeckung (4) mit Anschlägen (10), welche von an die Innenseite der Abdeckung (4) angeformten Ansätzen gebildet sind, an der Mantelfläche der Hülse (9) an. Die erste und zweite Achse (7 und 12) gehören zu einer kardanischen Gelenkvorrichtung (6), durch welche die Abdeckung (4) allseitig verschwenkbar mit dem Düsenkörper (5) verbunden ist. Dadurch ist nach einem Verstellen der Düse (2) von ihrer herausgefahrenen Stellung in ihre eingefahrene Stellung eine umlaufende Anlage der Abdeckung (4) an dem Rand der Karosserieöffnung (3) sicher.

### Bezugszeichenliste

### Wascheinrichtung für eine Lichtscheibe einer Leuchte oder eines Scheinwerfers eines Fahrzeuges

- 1: Karosserie
- 2: Düse
- 3: Karosserieöffnung
- 4: Abdeckung
- 5: Düsenkörper
- 6: Gelenkvorrichtung
- 7: erste Achse
- 8: Endabschnitt
- 9: Hülse
- 10: Anschläge
- 11: Verstellrichtung
- 12: zweite Achse
- 13: Nut-Feder-Verbindung
- 14: Randabschnitt
- 15: Aufsetzrichtung
- 16: Aussparung
- 17: Lagerelement
- 18: Lagerelement
- 19: Ratsche
- 20: Lagerzapfen

## Patentansprüche

1. Wascheinrichtung für eine Lichtscheibe einer Leuchte oder eines Scheinwerfers eines Fahrzeuges mit einer im Inneren der Karosserie (1) angeordneten Düsenverstellvorrichtung, durch die eine Düse (2) von einer inaktiven Stellung durch eine Karosserieöffnung (3) hindurch in eine aktive Stellung verstellbar ist, mit einer verschwenkbaren Abdeckung (4), welche an einem die Düse (2) tragenden verstellbaren Düsenkörper (5) der Düsenverstellvorrichtung angebracht ist und mit dem Düsenkörper (5) über eine kardanische Gelenkvorrichtung (6) verbunden ist, durch welche die verschwenkbare Abdeckung (4) in der inaktiven Stellung der Düse (2) selbsttätig an einen umlaufenden Rand der Karosserieöffnung (3) anlegbar ist, **dadurch gekennzeichnet, daß** eine erste Achse (7) der kardanischen Gelenkvorrichtung (6) von einer Hülse (9) und einem freien Endabschnitt (8) des Düsenkörpers (5) gebildet ist, auf welchem die Hülse (9) verdrehbar angeordnet ist, wobei die Mittelachse der Hülse (9) und des Endabschnitts (8) quer zur Verstellrichtung (11) der Düse (2) verläuft und eine zweite Achse (12) der kardanischen Gelenkvorrichtung (6) zwischen der Hülse (9) und der Abdeckung (4) besteht.

2. Wascheinrichtung nach Anspruch 1, **dadurch gekennzeichnet, daß** der Endabschnitt (8) des Düsenkörpers (5), auf den die Hülse (9) aufgesetzt ist, ein Gehäuse für die Düse (2) ist, welche mit einem eine Spritzöffnung aufweisenden Ende aus der Hülse (9) herausragt.

3. Wascheinrichtung nach Anspruch 1 oder 2, **dadurch gekennzeichnet, daß** zwischen der Hülse (9) und dem Endabschnitt (8) eine Nut-Feder-Verbindung (13) besteht, welche koaxial zu der ersten Achse (7) verläuft.

4. Wascheinrichtung nach Anspruch 3, **dadurch gekennzeichnet, daß** die Nut-Feder-Verbindung (13) zwischen einer zylindrischen Mantelfläche des Endabschnitts (8) und einer zylindrischen Innenfläche der Hülse (9) besteht, wobei die Feder beim Aufsetzen der Hülse (9) auf den Endabschnitt (8) selbstrastend in die umlaufende Nut eingreift.

5. Wascheinrichtung nach einem der Ansprüche 1 bis 4, **dadurch gekennzeichnet, daß** die Hülse (9) einen nach innen gerichteten Randabschnitt (14) aufweist, welcher angrenzend zu einem freien Rand des Endabschnitts (8) läuft und als Überdrückungsschutz dient.

6. Wascheinrichtung nach den Ansprüchen 3 bis 5, **dadurch gekennzeichnet, daß** die Hülse (9) mit ihrer Innenseite zwischen der Nut-Feder-Verbindung (13) und dem nach innen gerichteten Randabschnitt (14) zur Mantelfläche des Endabschnitts (8) beabstandet verläuft.

7. Wascheinrichtung nach einem der Ansprüche 1 bis 5, **dadurch gekennzeichnet, daß** die Hülse (9) ein in ihre Aufsetzrichtung (15) hin geöffnete Aussparung (16) aufweist, in welche mindestens ein die Verdrehung der Hülse (9) begrenzender Abschnitt des Düsenkörpers (5) eingreift, wobei der Abschnitt in beiden Endstellungen der Hülse (9) an einer der sich zugewandten Seitenflächen der Aussparung (16) angrenzt.

8. Wascheinrichtung nach einem der vorstehenden Ansprüche, **dadurch gekennzeichnet, daß** die zweite Achse (12) durch an die Außenseite der Hülse (9) und an die Innenseite der Abdeckung (4) angebrachte Lagerelemente (17, 18) bestimmt ist.

9. Wascheinrichtung nach Anspruch 8, **dadurch gekennzeichnet, daß** als Lagerelemente (17 und 18) Wandabschnitte dienen, welche Lagerzapfen und Lageröffnungen aufweisen, wobei die Wandabschnitte der Hülse (9) zur Abdeckung (4) hin gerichtet sind und mindestens ein Wandabschnitt federnd ausgeführt ist.

10. Wascheinrichtung nach Anspruch 8 oder 9, **dadurch gekennzeichnet, daß** die Abdeckung (4) beim Verschwenken um die zweite Achse (12) in beiden Endstellungen mit der Hülse (9) an Anschlägen (10) der Abdeckung anliegt, um eine Kippbewegung der Abdeckung (4) zu begrenzen.

## Claims

1. Washing device for a lens of a vehicle light or headlamp with a nozzle-positioning apparatus which is arranged inside the vehicle body (1) and by means of which a nozzle (2) is movable through a body opening (3) from an inactive position into an active position, with a pivotable cover (4) which is mounted on a movable nozzle-carrying nozzle body (5) of the nozzle-positioning apparatus and is connected to the nozzle body (5) by a cardan joint apparatus (6) by means of which the pivotable cover (4) can be automatically laid on a peripheral rim of the body opening (3) in the inactive position of the nozzle (2), **characterized in that** a first axis (7) of the cardan joint apparatus (6) is formed by a sleeve (9) and a free end portion (8) of the nozzle body (5) on which the sleeve (9) is twistably arranged, such that the central axis of the sleeve (9) and of the end portion (8) extends at right angles to the positioning direction (11) of the nozzle (2) and a second axis (12) of the cardan joint apparatus (6) exists between the sleeve (9) and the cover (4).

2. Washing device according to Claim 1, **characterized in that** the end portion (8) of the nozzle body (5) on which the sleeve (9) is mounted forms a housing for the nozzle (2), of which an end with a spray orifice juts out of the sleeve (9).

3. Washing device according to Claim 1 or Claim 2, **characterized in that** a tongue-and-groove connection (13) coaxial with the first axis (7) exists between the sleeve (9) and the end portion (8).

4. Washing device according to Claim 3, **characterized in that** the tongue-and-groove connection (13) exists between a cylindrical outer face of the end portion (8) and a cylindrical inner face of the sleeve (9), the tongue snapping into engagement with the peripheral groove when the sleeve (9) is slipped on to the end portion (8).

5. Washing device according to any one of Claims 1 to 4, **characterized in that** the sleeve (9) has an inwards-directed rim portion (14) which abuts a free rim of the end portion (8) and serves as protection against overcompression.

6. Washing device according to Claims 3 to 5, **characterized in that** the sleeve (9) extends with clearance between its inner face and the cylindrical face of the end portion (8) from the tongue-and-groove connection (13) to the inwards-directed rim portion (14).

7. Washing device according to any one of Claims 1 to 5, **characterized in that** the sleeve (9) has a cut-out (16) opening in the mounting direction (15) of the sleeve into which a portion of the nozzle body (5) sufficient to at least restrict the twisting of the sleeve (9) engages, the said portion abutting one or other of the sides of the cut-out (16) in the end positions of the sleeve (9).

8. Washing device according to any one of the preceding claims, **characterized in that** the second axis (12) is defined by bearing elements (17, 18) attached to the outside of the sleeve (9) and to the inside of the cover (4).

9. Washing device according to Claim 8, **characterized in that** wall portions carrying pivot pins and pivot holes serve as bearing elements (17, 18), the wall portions of the sleeve (9) being orientated towards the cover (4), and at least one wall portion being springy.

10. Washing device according to Claim 8 or Claim 9, **characterized in that** the cover (4) when pivoted about the second axis (12) rests [on] the sleeve (9) [by] stops (10) of the cover in both end positions to limit tilting of the cover (4).

## Revendications

1. Dispositif de lavage pour une plaque d'éclairage d'un feu ou d'un projecteur d'un véhicule, comportant un dispositif de réglage de buse agencé à l'intérieur de la carrosserie (1), au moyen duquel une buse (2) peut être réglée depuis une position inactive à travers une ouverture de carrosserie (3) jusque dans une position active, comportant un couvercle (4) pivotable qui est monté sur un corps de buse (5) réglable, portant la buse (2), du dispositif de réglage de buse, et relié au corps de buse (5) via une articulation à Cardan (6), au moyen de laquelle le couvercle (4) pivotable peut être posé, dans la position inactive de la buse (2), automatiquement sur un bord périphérique de l'ouverture de carrosserie (3), **caractérisé en ce qu'**un premier axe (7) de l'articulation à Cardan (6) est formé par une douille (9) et par un tronçon d'extrémité libre (8) du corps de buse (5) sur lequel la douille (9) est agencée en rotation, l'axe médian de la douille (9) et du tronçon d'extrémité (8) s'étendant transversalement à la direction de réglage (11) de la buse (2) et un deuxième axe (12) de l'articulation à Cardan (6) se trouvant entre la douille (9) et le couvercle (4).

2. Dispositif de lavage selon la revendication 1, **caractérisé en ce que** le tronçon d'extrémité (8) du corps de buse (5), sur lequel est posée la douille (9), est un boîtier pour la buse (2) qui fait saillie hors de la douille (9) avec une extrémité présentant un orifice d'injection.

3. Dispositif de lavage selon l'une ou l'autre des revendications 1 et 2, **caractérisé en ce qu'**entre la douille (9) et le tronçon d'extrémité (8) est constitué un assemblage à rainure-et-languette (13) qui s'étend coaxialement au premier axe (7).

4. Dispositif de lavage selon la revendication 3, **caractérisé en ce que** l'assemblage à rainure-et-languette (13) est constitué entre une surface enveloppe cylindrique du tronçon d'extrémité (8) et une surface intérieure cylindrique de la douille (9), la languette s'engageant automatiquement dans la rainure périphérique lors de la pose de la douille (9) sur le tronçon d'extrémité (8).

5. Dispositif de lavage selon l'une des revendications 1 à 4, **caractérisé en ce que** la douille (9) présente un tronçon de bord (4) orienté vers l'intérieur qui s'étend de manière adjacente à un bord libre du tronçon d'extrémité (8) et qui sert de protection à la surcompression.

6. Dispositif de lavage selon l'une des revendications 3 à 5, **caractérisé en ce que** la douille (9) s'étend avec sa face intérieure à distance de la surface enveloppe du tronçon d'extrémité (8), entre l'assemblage à rainure-et-languette (13) et le tronçon de bord (14) orienté vers l'intérieur.

7. Dispositif de lavage selon l'une des revendications 1 à 5, **caractérisé en ce que** la douille (9) présente un évidement (16) ouvert dans sa direction de pose (15), dans lequel s'engage au moins un tronçon du corps de buse (5), limitant la rotation de la douille (9), le tronçon étant adjacent à une des faces latérales de l'évidement (16), qui sont tournées l'une vers l'autre, dans les deux positions terminales de la douille (9).

8. Dispositif de lavage selon l'une des revendications précédentes, **caractérisé en ce que** le deuxième axe (12) est défini par des éléments de montage (17, 18) montés sur la face extérieure de la douille (9) et sur la face intérieure du couvercle (4).

9. Dispositif de lavage selon la revendication 8, **caractérisé en ce que** des tronçons de paroi, qui présentent des tourillons et des ouvertures de palier, servent d'éléments de montage (17 et 18), les tronçons de paroi de la buse (9) étant orientés vers le couvercle (4), et au moins un tronçon de paroi étant réalisé avec effet élastique.

10. Dispositif de lavage selon l'une ou l'autre des revendications 8 et 9, **caractérisé en ce que** le couvercle, lors de son pivotement autour du deuxième axe (12), est en appui avec la douille (9) sur des butées (10) du couvercle dans les deux positions terminales pour limiter un mouvement de basculement du couvercle (4).
